# EUROPÄISCHE PATENTSCHRIFT

(11) **EP 0 901 205 B1**
(45) Veröffentlichungstag und Bekanntmachung des Hinweises auf die Patenterteilung: **23.10.2002**
(21) Anmeldenummer: 98113862.1
(22) Anmeldetag: 24.07.1998
(51) Int. Cl.: H01S 3/03, H01S 3/08

(54) **Gaslaser mit in mehreren Ebenen gefaltetem Strahlengang**
Gas laser with beam path being folded in several levels
Laser à gaz à rayonnement plié selon plusieurs plans

(30) Priorität: 08.08.1997 DE 19734308
(43) Veröffentlichungstag der Anmeldung: 10.03.1999
(73) Patentinhaber: Rofin Sinar Laser GmbH, 22113 Hamburg (DE)
(72) Erfinder: Schanz, Klaus, 21465 Reinbek (DE); Leifermann, Berthold, 21465 Reinbek (DE); Porath, Jörg, 20535 Hamburg (DE)
(74) Vertreter: Mörtel, Alfred, Dr. Dipl.-Phys.

(56) Entgegenhaltungen:
- EP-A- 0 580 867
- EP-A- 0 623 979
- EP-A- 0 695 599
- PATENT ABSTRACTS OF JAPAN vol. 18, no. 120 (E-1516), 25. Februar 1994 -& JP 05 315678 A (AMADA CO LTD), 26. November 1993
- PATENT ABSTRACTS OF JAPAN vol. 011, no. 017 (E-471), 17. Januar 1987 -& JP 61 187386 A (MITSUBISHI ELECTRIC CORP), 21. August 1986

## Beschreibung

Die Erfindung bezieht sich auf einen axial geströmten Gaslaser mit einem Resonator, der einen in mehreren Ebenen gefalteten Strahlengang aufweist.

Aus der britischen Offenlegungsschrift 2 090 047 A ist es bekannt, daß es für die Materialbearbeitung mit einem Laserstrahl, insbesondere für das Schneiden eines Werkstückes zweckmäßig ist, einen zirkular polarisierten Laserstrahl zu verwenden, da in diesem Falle die Schneidqualität beim Laserschneiden unabhängig von der Schnittrichtung ist. Bei dem aus dieser Offenlegungsschrift bekannten Laser wird eine solche zirkulare Polarisation dadurch erzeugt, daß ein aus dem Resonator des Lasers austretender linear polarisierter Laserstrahl mit einem unter 45° zur Ausbreitungsrichtung geneigten Phasenschieberspiegel in einen zirkular polarisierten Laserstrahl umgewandelt wird. Die Polarisationsrichtung des linear polarisierten Laserstrahls muß hierzu einen Winkel von 45° zu der von der Normalen des Phasenschieberspiegels und der Einfallsrichtung auf den Phasenschieberspiegel aufgespannten Einfallsebene aufweisen. Der bekannte CO₂-Gaslaser hat einen gefalteten Strahlengang, der in einer Faltebene eine Z-Faltung aufweist. Ein Faltspiegel der Z-Faltung ist mit seiner Normalen unter 45° zu der von der Z-Faltung aufgespannten Ebene angeordnet, so daß der auf ihn aus einem Z-Schenkel einfallende Laserstrahl gemeinsam mit der Normalen eine Ebene aufspannt, die unter 45° zur Ebene der Z-Faltung orientiert ist. Auf diese Weise ist der aus dem Resonator austretende Strahl bereits unter 45° zur Ebene der Z-Faltung polarisiert. Der aus dem Resonator austretende Laserstrahl wird mit dem Phasenschieberspiegel in einen zirkular polarisierten Strahl umgewandelt, der dann über weitere resonatorexterne Umlenkspiegel auf ein Werkstück gerichtet wird.

Aus der europäischen Patentschrift 0 121 661 B1 ist es bekannt, einen ebenen Resonator mit mehrfach U-förmig gefaltetem Strahlengang unter 45° zur Horizontalen anzuordnen, so daß die Polarisationsrichtung des aus dem Resonator infolge der U-Faltung senkrecht zu der von der U-Faltung aufgespannten Ebene linear polarisierten Laserstrahl beim Verlassen des Resonators bereits unter 45° zur Horizontalen orientiert ist. Dieser unter 45° linear polarisierte Laserstrahl kann dann mit einem Phasenschieberspiegel sowohl zur in der Regel horizontal angeordneten Bearbeitungsoberfläche eines Werkstücks um 90° umgelenkt als auch in einen zirkular polarisierten Laserstrahl umgewandelt werden. Bei dieser Anordnung entfällt somit der bei der britischen Patentanmeldung 2 090 047 A im Resonator erforderliche Polarisationsspiegel am Ende eines Schenkels der Z-Faltung.

Aus der europäischen Patentanmeldung 0 591 541 A1 ist ein CO₂-Gaslaser bekannt, dessen Resonator einen in zwei zueinander senkrechten U-Ebenen gefalteten Strahlengang aufweist, wobei die beiden U-Ebenen unter 45° zur Horizontalen angeordnet und miteinander verschränkt sind. Die beiden U-Faltungen sind über einen Kopplungsspiegel miteinander verknüpft, dessen Normale vertikal orientiert ist. Auf diese Weise wird ein unter 45° zur Vertikalen linear polarisierter Laserstrahl erzeugt.

Aus der deutschen Offenlegungsschrift DE 37 22 256 A1 ist ein Laserresonator bekannt, der zwei in voneinander beabstandeten Ebenen parallel zueinander angeordnete U-Faltungen aufweist, die über eine Diagonale unter 45° zu den U-Faltebenen verlaufende Kopplungsstrecke miteinander verknüpft sind. Diese diagonale Kopplungsstrecke verbindet einander diagonal gegenüberliegende Schenkel der beiden U-Faltungen. Sie bewirkt eine Drehung des Strahls um 90°, so daß die s- und die p-Komponente der oberen U-Faltebene in eine p- bzw. s-Komponente der unteren U-Faltebene transformiert wird. Dadurch kompensieren sich die Polarisationswirkungen der in den U-Faltebenen angeordneten 90°-Umlenkspiegel, so daß eine durch die diagonale Umlenkung erfolgende 45°-Polarisation verbleibt.

Ein weiteres Erfordernis, das ein CO₂-Gaslaser, der insbesondere für Schneidanwendungen eingesetzt werden soll, erfüllen muß, ist neben der linearen Polarisation des Ausgangsstrahls unter 45° zur Horizontalen auch eine rotationssymmetrische Strahldichteverteilung sowie eine hohe Strahlqualität. Eine hohe Strahlqualität erfordert eine niedrige Fresnelzahl N_{F} = a²/(λ • L) (a Apertur; λ Wellenlänge; L Resonatorlänge). In der Praxis beträgt die für Hochleistungs-CO₂-Gaslaser verwendete Resonatorlänge etwa 5-10 m. Der Aufbau eines kompakten Hochleistungs-CO₂-Gaslasers ist somit nur mit einem Resonator möglich, der einen mehrfach gefalteten Strahlengang aufweist. Ein mehrfach gefalteter Strahlengang, wie er aus den eingangs erwähnten Druckschriften bekannt ist, hat jedoch den Nachteil, daß eine Vielzahl von Umlenk- oder Faltspiegeln im Resonator erforderlich ist, die den Laser verteuern und aufgrund der in ihnen stattfindenden Absorption zu einer Verringerung des Wirkungsgrades führen. Eine Vielzahl von Umlenk- oder Faltspiegeln erschwert darüber hinaus die Justage des Resonators. Außerdem ist ein aufwendiger mechanischer Aufbau erforderlich, der die beim Betrieb durch Aufheizung entstehenden thermischen Spannungen aufnimmt, ohne daß hiermit eine Dejustage der empfindlichen optischen Komponenten im Resonator einhergeht.

Der Erfindung liegt nun die Aufgabe zugrunde, einen axial geströmten Gaslaser anzugeben, der bei kompaktem Aufbau eine große Resonatorlänge ermöglicht und mit einer möglichst geringen Anzahl von Faltspiegeln an seinem Ausgang einen unter 45° zur Horizontalen linear polarisierten Laserstrahl erzeugt.

Die genannte Aufgabe wird gelöst mit einem axial geströmten Gaslaser mit den Merkmalen des Patentanspruches 1. Ein solcher axial geströmter Gaslaser, enthält gemäß der Erfindung einen Resonator, der einen gefalteten Strahlengang in einer ersten Faltebene und eine dazu unter 45° geneigten zweiten Faltebene aufweist, wobei in der ersten Faltebene zumindest eine Z-Faltung und in der zweiten Faltebene zumindest eine U-Faltung des Strahlenganges vorgesehen ist. Auf diese Weise wird ein unter 45° zur ersten Faltebene linear polarisierter Laserstrahl erzeugt.

Aus der japanischen Offenlegungsschrift 5-315 678 ist zwar ein Gaslaser bekannt, bei dem der Resonator in einer Faltebene eine Z-Faltung und in einer dazu unter 45° geneigten Faltebene eine U-Faltung aufweist. Bei diesem Resonator handelt es sich allerdings um einen quergeströmten Gaslaser, der aufgrund der mit einer solchen Bauart einhergehenden Probleme andere Anforderungen an die Konfiguration des Resonators stellt, die nicht auf axialgeströmte Gaslaser übertragbar ist.

Insbesondere wird die erste Faltebene in der Horizontalen positioniert, so daß der aus dem Resonator austretende Laserstrahl unter 45° zur Horizontalen linear polarisiert.

Die Ebene der U-Faltung legt eindeutig die Polarisationsebene oder Polarisationsrichtung fest, da die zum Umlenken in der U-Faltung unter 45° zur Einfallsrichtung des Laserstrahls orientierten Faltspiegel für einen senkrecht zur Einfallsebene (das ist die Ebene der U-Faltung) linear polarisierten Laserstrahl (s-Welle) eine höhere Reflektivität besitzen als für einen Laserstrahl, dessen Polarisationsrichtung eine Komponente parallel zur Einfallsebene hat (p-Welle). Mit anderen Worten: Die s-Anteile der im Resonator sich ausbreitenden elektromagnetischen Wellen werden durch die geringere Absorption selektiert und die p-Anteile werden unterdrückt.

Die Faltspiegel der Z-Faltung tragen demgegenüber nicht zur Polarisation des im Resonator erzeugten Laserstrahls bei, da der Laserstrahl auf die Umlenkspiegel der Z-Faltung in einem spitzen Winkel auftrifft, in dem die unterschiedliche Absorption der s- und p-Wellen nicht in dem Ausmaß in Erscheinung tritt, wie bei den unter 45° zum Laserstrahl orientierten Umlenkspiegeln der U-Faltung.

In einer bevorzugten Ausgestaltung der Erfindung ist in der ersten Faltebene wenigstens eine erste und eine dazu parallele zweite Gasentladungsstrecke angeordnet, die diagonal miteinander gekoppelt sind, wobei die erste Gasentladungsstrecke und eine an sie U-förmig gekoppelte parallele dritte Gasentladungsstrecke die zweite Faltebene bilden. Durch diese Maßnahme ist ein kompakter Aufbau bei hoher Resonatorlänge möglich.

Vorzugsweise schneiden die Gasentladungsstrecken eine senkrecht zu ihnen verlaufende Schnittebene in Punkten, die ein gleichschenkliges und damit auch rechtwinkliges Dreieck aufspannen. Dies ermöglicht aufgrund der hierdurch gegebenen Symmetrie einen kompakten und stabilen Aufbau.

In einer weiteren Ausgestaltung der Erfindung ist die erste und die zweite Gasentladungsstrecke durch eine passive Kopplungsstrecke diagonal miteinander gekoppelt, wobei die Kopplungsstrecke von Lasergas durchströmt ist. Auf diese Weise kann eine sehr spitzwinklige Z-Faltung realisiert werden, da die diagonal geführte Gasentladungsstrecke nicht mit Elektroden versehen werden muß, die gegenüber den benachbarten Elektroden der Z-Schenkel abgeschirmt werden müßten.

In einer weiteren bevorzugten Ausgestaltung der Erfindung umfaßt jede Gasentladungsstrecke wenigstens zwei aktive Teilstrecken, die axial in einander entgegengesetze Richtungen durchströmt sind. Dadurch können auch bei langen Gasentladungsstrecken hohe Leistungsdichten erzielt werden, da das Lasergas nicht die gesamte Gasentladungsstrecke durchströmen muß, was zu einer übermäßigen Aufheizung des Lasergases und zu einer Verringerung des Wirkungsgrades führen würde. In einer weiteren vorteilhaften Ausgestaltung der Erfindung münden jeweils benachbarte Teilstrecken, in denen die Gasströmung aufeinanderzugerichtet ist, in einen gemeinsamen Gas-Absaugblock. Dementsprechend münden jeweils benachbarte Teilstrecken, in denen die Gasströmung voneinander weg gerichtet ist, in einen gemeinsamen Gas-Zufuhrblock. Dadurch ist eine kompakte Gasführung gewährleistet.

In einer besonders bevorzugten Ausgestaltung der Erfindung umfaßt jede Gasentladungsstrecke dieselbe Anzahl von Teilstrecken, wobei einander quer zur Längsrichtung benachbarten Teilstrecken jeweils ein gemeinsamer Gas-Zufuhr- und Gas-Absaugblock zugeordnet ist.

Insbesondere umfaßt jede Gasentladungsstrecke vier Teilstrecken, wobei jeweils einander benachbarte Teilstrecken in einander entgegengesetzte Richtungen durchströmt sind. Auf diese Weise läßt sich eine relativ lange Gasentladungsstrecke realisieren, in der ein unzulässiges Aufheizen des Lasergases mit vertretbarem technischen Aufwand verhindert werden kann.

Vorzugsweise sind die Teilstrecken im Gas-Absaug- und/oder im Gas-Zufuhrblock axial schwimmend gelagert. Durch eine solche schwimmende Lagerung werden die thermischen Ausdehnungen der die Teilstrecken bildenden Entladungs- oder Kopplungsrohre weitgehend kräftefrei aufgenommen.

Insbesondere sind die einander benachbarten aktiven und passiven Teilstrecken am Ende der Gasentladungsstrecken bzw. der Kopplungsstrecke jeweils in einem gemeinsamen Endflansch axial schwimmend gelagert.

In weiter bevorzugten Ausgestaltungen der Erfindung sind in den Endflanschen die Resonatorspiegel, d. h. die Faltspiegel, der Rückspiegel und der Auskoppelspiegel des Resonators, angeordnet. Dies ermöglicht einen kompakten Aufbau sowie eine gute Kühlung der Resonatorspiegel.

Vorzugsweise sind die Endflansche zugleich zur Zuführung von Frischgas, d. h. gekühltem Lasergas, vorgesehen. Auf diese Weise ist eine Aufheizung der Resonatorspiegel zusätzlich verringert.

Insbesondere sind die Endflansche durch Distanzrohre starr miteinander verbunden.

In einer besonders bevorzugten Ausgestaltung der Erfindung ist in den Endflanschen ein zentrales Tragrohr axial schwimmend gelagert, das insbesondere zugleich zur Führung von gekühltem Lasergas vorgesehen ist.

In einer weiteren vorteilhaften Ausgestaltung sind zwei Wärmetauscher vorgesehen, wobei jeder Gas-Absaugblock saugseitig an jeden Wärmetauscher angeschlossen ist. Dies ermöglicht eine Gasführung mit kurzen Gaswegen und entsprechend niedrigen Strömungswiderständen.

Entsprechend einer weiteren vorteilhaften Ausführungsform weisen zumindest die Faltspiegel der Z-Faltung sphärisch oder asphärisch gekrümmte Oberflächen auf, insbesondere sind die Spiegelflächen Rotationsparaboloide, die zur Bildung einer Z-Faltung mit ihrer Rotationsachse oder optischen Achse unter einem Winkel zur Fortpflanzungsrichtung des Laserstrahls angeordnet sind (off-axis) und bilden ein resonatorintemes Teleskop. Damit kann die Fresnelzahl bei gegebener Gesamtlänge oder bei gleicher Fresnelzahl durch Aufweitung des Laserstrahls die Belastung des Auskoppelfensters reduziert werden.

Zur weiteren Erläuterung der Erfindung wird auf die Ausführungsbeispiele der Zeichnung verwiesen. Es zeigen:
- Fig. 1: die Resonatorstruktur eines Gaslasers gemäß der Erfindung in einer schematischen perspektivischen Darstellung.
- Fig. 2: die Resonatorstruktur in einem Schnitt senkrecht zur Längsrichtung.
- Fig. 3: eine vorteilhafte Ausgestaltung der Resonatorstruktur mit gekrümmten Faltspiegeln.
- Fig. 4: den mechanischen Aufbau des erfindungsgemäßen Gaslasers in einer perspektivischen Darstellung.
- Fig. 5: die Gasführung beim erfindungsgemäßen Gaslaser in einem Blockschaltbild.

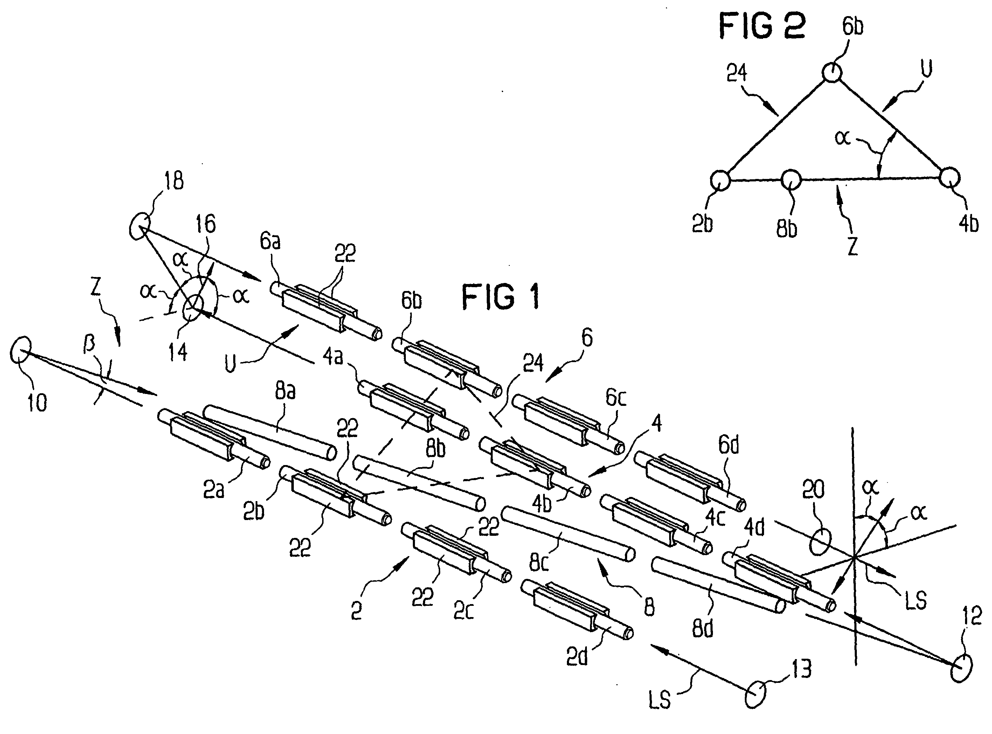

Gemäß Fig. 1 umfaßt ein Gaslaser, insbesondere ein axial geströmter CO₂-Gaslaser, eine erste, zweite und dritte Gasentladungsstrecke 2, 4 bzw. 6. Die Gasentladungsstrecken 2, 4, 6 sind parallel zueinander angeordnet und haben jeweils eine Länge von 1 m - 2,5 m. Die erste Gasentladungsstrecke 2 ist mit der zweiten Gasentladungsstrecke 4 über eine diagonale Kopplungsstrecke 8 und Faltspiegel 10 und 12 optisch gekoppelt. Am vom Faltspiegel 10 abgewandten Ende der ersten Gasentladungsstrecke 2 ist ein totalreflektierender Rückspiegel 13 angeordnet. Ein Laserstrahl LS breitet sich in Längsrichtung der Gasentladungsstrecken 2, 4, 6 und der Kopplungsstrecke 8 aus.

Erste Gasentladungsstrecke 2, zweite Gasentladungsstrecke 4 und Kopplungsstrecke 8 spannen eine erste Faltebene Z auf, in der eine Z-Faltung des Strahlengangs des Laserstrahls LS vorliegt.

An dem Faltspiegel 12 gegenüberliegenden Ende der zweiten Gasentladungsstrecke 4 ist ein Faltspiegel 14 derart angeordnet, daß die aus seiner Normalen 16 und der Längsrichtung der Gasentladungsstrecke 4 aufgespannte Ebene (Einfallsebene) unter einem Winkel α = 45° zu der ersten Faltebene Z orientiert ist. Diese Einfallsebene legt eine zweite Faltebene U des gefalteten Strahlengangs fest. Der aus der Gasentladungsstrecke 4 zum Faltspiegel 14 austretende Strahl wird in dieser zweiten Faltebene um 90° umgelenkt und breitet sich unter 45° zur ersten Faltebene Z aus. Dem Faltspiegel 14 ist ein Faltspiegel 18 zugeordnet, der den auf ihn einfallenden Laserstrahl LS in der zweiten Faltebene U um 90° umlenkt. Die Faltspiegel 14 und 18 bilden somit eine U-Faltung in der zweiten Faltebene U. Der Faltspiegel 18 ist an die dritte Gasentladungsstrecke 6 gekoppelt, an deren vom Faltspiegel 18 abgewandten Ende ein Auskoppelspiegel 20 angeordnet ist, aus dem der Laserstrahl LS austritt.

Der Winkel β der Z-Faltung ist spitzwinklig und beträgt beispielsweise etwa 10-20°, so daß der Einfallswinkel der auf die Faltspiegel 10, 12 der Z-Faltung aus den Entladungsstrecken 2, 4 bzw. der Kopplungsstrecke 8 einfallenden Laserstrahlen LS zwischen 5 und 10° beträgt. Auf diese Weise ist sichergestellt, daß die Faltspiegel 10, 12 der Z-Faltung keinen Einfluß auf die Polarisationsrichtung des aus dem Auskoppelspiegel 20 austretenden Laserstrahls LS haben. Diese Polarisationsrichtung wird allein durch die Faltspiegel 14, 18 der U-Faltung festgelegt und ist senkrecht zur zweiten Faltebene U. Bei waagerecht angeordneter erster Faltebene Z ist somit der aus dem Auskoppelspiegel 20 austretende Laserstrahl LS unter einem Winkel α = 45° zur Horizontalen oder Vertikalen linear polarisiert.

Jede Gasentladungsstrecke 2, 4, 6 ist in Teilstrecken 2a - 2d, 4a - 4d bzw. 6a - 6d aufgeteilt. Diese Teilstrecken 2a - 2d, 4a - 4d, 6a - 6d werden durch Rohrabschnitte gebildet, denen jeweils ein Elektrodenpaar 22 zur HF-Anregung des in den Rohrabschnitten axial strömenden Lasergases zugeordnet ist. Die Teilstrecken 2a - 2d, 4a - 4d, 6a - 6d legen den Raum fest, in dem eine Gasentladung stattfindet und bilden somit das laseraktive Volumen.

Im Ausführungsbeispiel ist zu erkennen, daß auch die diagonale Kopplungsstrecke 8 in 4 Teilstrecken 8a - 8d aufgeteilt ist.

Die Gasentladungsstrecken 2, 4 und 6 sind in einer Ebene senkrecht zu ihrer Längsrichtung an den Eckpunkten eines Dreiecks 24 angeordnet.

In Fig. 2 ist zu erkennen, daß dieses Dreieck 24 gleichschenklig-rechtwinklig ist, so daß die Gasentladungsstrecke 6 von den Gasentladungsstrecken 2 und 4 gleich beabstandet ist. Die erste Faltebene Z und die zweite Faltebene U sind senkrecht zur Zeichenebene und zueinander unter den Winkel α = 45° geneigt angeordnet.

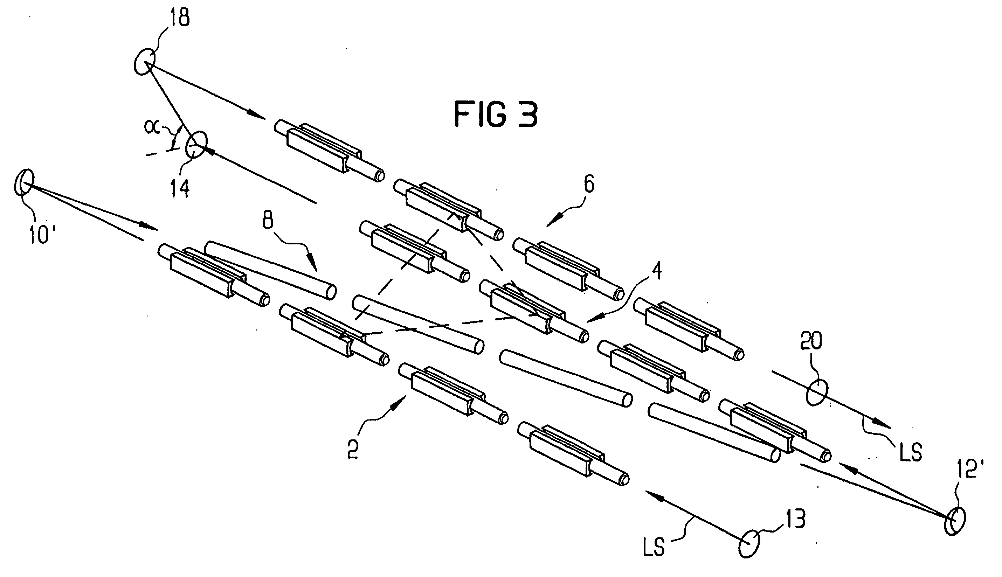

Gemäß Fig. 3 ist eine Ausführungsform vorgesehen, bei der der Kopplungsstrecke 8 Faltspiegel 10' und 12' zugeordnet sind, deren Oberflächen gekrümmt sind. Im Ausführungsbeispiel hat der Faltspiegel 10' eine konkav und der Faltspiegel 12' eine konvex gekrümmte Oberfläche. Die beiden Faltspiegel 10' und 12' bilden ein resonatorinternes Teleskop, d. h. ihre Brennpunkte fallen zusammen, so daß durch sie ein paralleles Strahlenbündel in ein paralleles Strahlenbündel umgewandelt wird. Mit Hilfe dieses resonatorinternen Teleskops kann die Fresnelzahl bei gegebener Gesamtlänge weiter verringert werden. Die Faltspiegel 10' und 12' sind in einer bevorzugten Ausführungsform sphärisch gekrümmt. In einer weiteren vorteilhaften Ausführungsform können auch asphärische Faltspiegel vorgesehen sein, die aus off-axis angeordneten Rotationsparaboloiden gebildet sind, um sphärische Abbildungsfehler zu vermeiden.

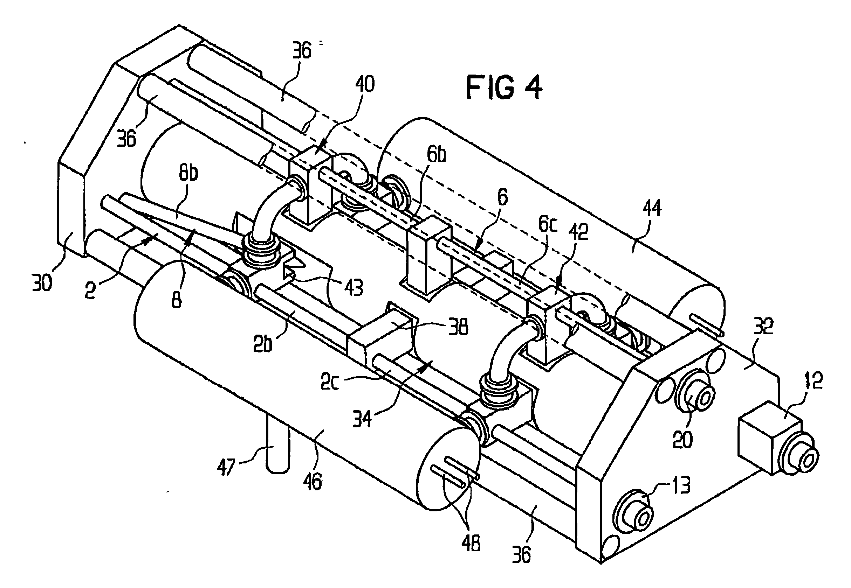

Gemäß Fig. 4 sind die Gasentladungsstrecken 2, 4 (in der Fig. nicht sichtbar), 6 und die Kopplungsstrecke 8 zwischen zwei Endflanschen 30 und 32 angeordnet. Die Endflansche 30 und 32 tragen die Resonatorspiegel des Resonators, von denen in der Figur die Fassungen für den Rückspiegel 13, den Faltspiegel 12 der Z-Faltung sowie für den Auskoppelspiegel 20 sichtbar sind. In den beiden Endflanschen 30, 32 ist axial schwimmend ein zentrales Tragrohr 34 gelagert. Das zentrale Tragrohr 34 umgebende Distanzrohr 36 aus einem Werkstoff mit einem niedrigen thermischen Ausdehnungskoeffizienten verbinden die Endflansche 30, 32 starr miteinander.

Mittig im Tragrohr 34 ist ein T-förmiger Gas-Zufuhrblock 38 angeordnet, in den die in der Mitte liegenden Teilstrecken 2b, 2c, 4b, 4c, 6b, 6c und 8b, 8c mit ihren einander zugewandten Enden münden. Der Gas-Zufuhrblock 38 ist mit in der Figur nicht sichtbaren innenliegenden Kanälen versehen, durch die im Tragrohr geführtes Lasergas in die Teilstrecken 2b, 2c, 4b, 4c, 6b, 6c, 8b, 8c eingespeist wird. Zwischen den Endflanschen 30, 32 und dem Gas-Zufuhrblock 38 ist jeweils ein ebenfalls T-förmiger Gas-Absaugblock 40 bzw. 42 angeordnet, in den die Teilstrecken 2a, 2b, 4a, 4b, 6a, 6b bzw. 2c, 2d, 4c, 4d, 6c, 6d mit ihren einander zugewandten Enden münden. In der Figur ist außerdem zu erkennen, daß der Gas-Absaugblock 40 und nicht sichtbar auch der Gas-Absaugblock 42 jeweils eine Ausnehmung 43 aufweisen, durch die die Teilstrecken 8b bzw. 8c der Kopplungsstrecke 8 hindurchgeführt sind, so daß in diesem Fall die Kopplungsstrecke 8 nur zwei Teilstrecken 8b und 8c aufweist.

Die Gas-Absaugblöcke 40 und 42 sind an einer Seite des Tragrohres 34 an einen Wärmetauscher 44 und an der gegenüberliegenden Seite des Tragrohres 34 an einen Wärmetauscher 46 angeschlossen, der jeweils über eine mittige Absaugleitung 47 saugseitig an einen Verdichter oder an ein Gebläse angeschlossen ist.

Die Wärmetauscher 44 und 46 sind sogenannte Rippenrohrwärmetauscher, die mit Anschlüssen 48 für Zu- und Abfuhr von Kühlwasser versehen sind.

Die Rohrabschnitte der Teilstrecken 2a - d, 4a - d, 6a - d und 8b, c sind in den Endflanschen 30, 32 im Gas-Zufuhrblock 38 und in den Gas-Absaugblöcken 40, 42 axial schwimmend, beispielsweise mit O-Ring-Dichtungen, gelagert, so daß zwischen Resonatorstruktur und Tragrohr 34 keine Kräfte übertragen werden können.

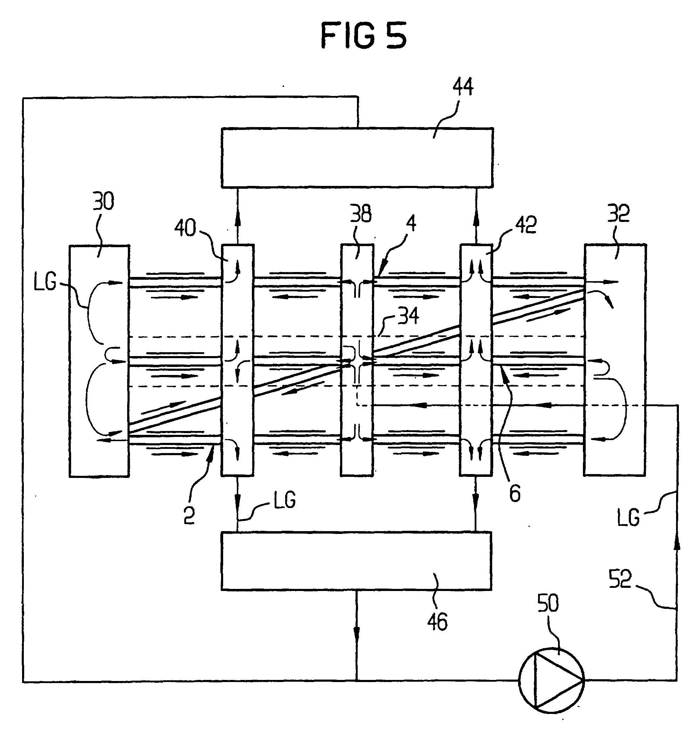

Im Blockschaltbild gemäß Fig. 5 ist zu erkennen, daß ein Verdichter oder ein Gebläse 50 gekühltes Lasergas LG (Frischgas) dem zentralen Tragrohr 34 zuführt, von dem aus es in die Endflansche 30 und 32 sowie in den mittig angeordneten Gas-Zufuhrblock 38 strömt, die das gekühlte Lasergas LG in die jeweils zugeordneten Teilstrecken der Gasentladungsstrecken 2, 4, 6 und der Kopplungsstrecke 8 einspeisen. In der Figur ist zu erkennen, daß jeweils einander benachbarte Teilstrecken einer Gasentladungsstrecke 2, 4 oder 6 und der Kopplungsstrecke 8 in entgegensetzter Richtung vom Gas durchströmt werden, wobei die Endflansche 30 und 32 im Ausführungsbeispiel auch durch die Kopplungsstrecke 8 mit Gas gespeist werden.

Die Gas-Absaugblöcke 40 und 42 sind sowohl an den Wärmetauscher 44 als auch an den Wärmetauscher 46 angeschlossen, die jeweils saugseitig mit dem Eingang des Verdichters 50 verbunden sind.

### Bezugszeichenliste

- 2: erste Gasentladungsstrecke
- 4: zweite Gasentladungsstrecke
- 3: dritte Gasentladungsstrecke
- 8: Kupplungsstrecke
- 10: Faltspiegel
- 10': sphärisch gekrümmter Faltspiegel
- 12: Faltspiegel
- 12': sphärisch gekrümmter Faltspiegel
- 13: Rückspiegel
- 14: Faltspiegel
- 16: Normale
- 18: Faltspiegel
- 20: Auskoppelspiegel
- 2a-d,4a-d, 6a-d,8a-d: Teilstrecke
- 30: Endflansch
- 32: Endflansch
- 34: Tragrohr
- 36: Distanzrohr
- 38: Gas-Zufuhrblock
- 40: Gas-Absaugblock
- 42: Gas-Absaugblock
- 44: Wärmetauscher
- 46: Wärmetauscher
- 47: Absaugleitung
- 48: Anschluß
- 50: Verdichter

## Patentansprüche

1. Axialgeströmter Gaslaser mit einem Resonator, der einen gefalteten Strahlengang in einer ersten Faltebene (Z) und einer dazu unter 45° geneigten zweiten Faltebene (U) aufweist, wobei in der ersten Faltebene (Z) zumindest eine Z-Faltung und in der zweiten Faltebene zumindest eine U-Faltung (U) des Strahlengangs vorgesehen ist.

2. Gaslaser nach Anspruch 1, bei dem die zweite Faltebene (U) unter 45° zur Horizontalebene geneigt ist.

3. Gaslaser nach Anspruch 1 oder 2, bei dem in der ersten Faltebene (Z) wenigstens eine erste und eine dazu parallele zweite Gasentladungsstrecke (2 bzw. 4) angeordnet sind, die diagonal miteinander gekoppelt sind, wobei die erste Gasentladungsstrecke (6) und eine an sie U-förmig gekoppelte parallele dritte Gasentladungsstrecke die zweite Faltebene (U) bilden.

4. Gaslaser nach Anspruch 3, bei dem die Gasentladungsstrecken eine senkrecht zu ihnen verlaufende Schnittebene in Punkten schneiden, die ein gleichschenkliges Dreieck (24) aufspannen.

5. Gaslaser nach Anspruch 3 oder 4, bei dem die erste und die zweite Gasentladungsstrecke (2,4) durch eine passive Kopplungsstrecke (8) diagonal miteinander gekoppelt sind, die von Lasergas (LG) durchströmt ist.

6. Gaslaser nach Anspruch 3, 4 oder 5, bei dem jede Gasentladungsstrecke (2,4,6) wenigstens zwei aktive Teilstrecken umfaßt (2a-d, 4a-d, 6a-d), die axial in einander entgegengesetzte Richtungen durchströmt sind.

7. Gaslaser nach Anspruch 5 oder 6, bei dem die Kopplungsstrecke (8) wenigstens zwei passive Teilstrecken (8b,8c) umfaßt, die axial in einander entgegengesetzten Richtungen durchströmt sind.

8. Gaslaser nach Anspruch 6 oder 7, bei dem jeweils benachbarte Teilstrecken, in denen die Gasströmung aufeinander zu gerichtet ist, in einen gemeinsamen Gas-Absaugblock (40,42) münden.

9. Gaslaser nach einem der Ansprüche 6 bis 8, bei dem jeweils benachbarte Teilstrecken, in denen die Gasströmung voneinander weg gerichtet ist, in einen gemeinsamen Gas-Zufuhrblock (38) münden.

10. Gaslaser nach Anspruch 8 oder 9, bei dem jede Gasentladungsstrecke (2,4,6) dieselbe Anzahl von Teilstrecken (2a-d, 4a-d, 6a-d) umfaßt, wobei einander quer zu ihrer Längsrichtung benachbarten Teilstrecken jeweils ein gemeinsamer Gas-Zufuhr- und Gas-Absaugblock (38 bzw. 40,42) zugeordnet ist.

11. Gaslaser nach einem der Ansprüche 6 bis 9, bei dem jede Gasentladungsstrecke (2,4,6) vier Teilstrecken (2a-d, 4a-d, 6a-d) umfaßt, wobei jeweils einander benachbarte Teilstrecken in einander entgegengesetzte Richtungen durchströmt sind.

12. Gaslaser nach einem der Ansprüche 8 bis 11, bei dem die Teilstrecken im Gas-Absaug- und/oder im Gas-Zufuhrblock (38,40,42) axial schwimmend gelagert sind.

13. Gaslaser nach einem der Ansprüche 3 bis 12, bei dem die einander benachbarten aktiven Teilstrecken (2a,4a,6a; 2d,4d,6d) am Ende der Gasentladungsstrecken (2,4,6) jeweils in einem gemeinsamen Endflansch (30 bzw. 32) axial schwimmend gelagert sind.

14. Gaslaser nach Anspruch 13, bei dem die passiven Teilstrecken (8a,8d; 8b,8c) am Ende der Kopplungsstrecke (8) jeweils in dem ihnen benachbarten Endflansch (30 bzw. 32) axial schwimmend gelagert sind.

15. Gaslaser nach Anspruch 13 oder 14, bei dem in den Endflanschen (30,32) die Resonatorspiegel (10,12,13,14,18; 10',12') des Resonators angeordnet sind.

16. Gaslaser nach einem der Ansprüche 13 bis 15, bei dem die Endflansche (30,32) zugleich zur Zuführung von gekühltem Lasergas (LG) vorgesehen sind.

17. Gaslaser nach einem der Ansprüche 13 bis 16, bei dem die Endflansche (30,32) durch Distanzrohre (36) starr miteinander verbunden sind.

18. Gaslaser nach einem der Ansprüche 13 bis 16, bei dem zwischen den Endflanschen (30,32) ein zentrales Tragrohr (34) axial schwimmend gelagert ist.

19. Gaslaser nach Anspruch 18, bei dem das zentrale Tragrohr (34) zugleich zur Führung von gekühltem Lasergas (LG) vorgesehen ist.

20. Gaslaser nach Anspruch 18 oder 19, bei dem zwei parallelgeschaltete Wärmetauscher (44,46) vorgesehen sind, wobei jeder Gas-Absaugblock (40,42) saugseitig an jeden Wärmetauscher (44,46) angeschlossen ist.

21. Gaslaser nach einem der vorhergehenden Ansprüche, bei dem zumindest die Faltspiegel (10',12') einer Z-Faltung sphärisch gekrümmte Oberflächen aufweisen.

22. Gaslaser nach einem der vorhergehenden Ansprüche, bei dem zumindest die Faltspiegel (10',12') einer Z-Faltung asphärisch gekrümmte Oberflächen aufweisen.

23. Gaslaser nach Anspruch 21 oder 22, bei dem die Faltspiegel (10',12') ein resonatorintemes Teleskop bilden.

## Claims

1. Axial-flow gas laser having a resonator which has a folded beam path in a first folding plane (Z) and in a second folding plane (U), inclined at 45° thereto, at least one Z-fold of the beam path being provided in the first folding plane (Z) and at least one U-fold of the beam path being provided in the second folding plane (U).

2. Gas laser according to Claim 1, in which the second folding plane (U) is inclined at 45° to the horizontal plane.

3. Gas laser according to Claim 1 or 2, in which there are arranged in the first folding plane (Z) at least a first gas discharge section (2) and a second gas discharge section (4) parallel thereto which are intercoupled diagonally, the first gas discharge section (6) and a parallel third gas discharge section coupled to it in a U-shaped fashion forming the second folding plane (U).

4. Gas laser according to Claim 3, in which the gas discharge sections intersect a plane of section extending perpendicular to them in points which define an isosceles triangle (24).

5. Gas laser according to Claim 3 or 4, in which the first and the second gas discharge section (2, 4) are intercoupled diagonally by a passive coupling section (8) through which laser gas (LG) flows.

6. Gas laser according to Claim 3, 4 or 5, in which each gas discharge section (2, 4, 6) comprises at least two active subsections (2a-d, 4a-d, 6a-d) through which flow occurs axially in mutually opposite directions.

7. Gas laser according to Claim 5 or 6, in which the coupling section (8) comprises at least two passive subsections (8b, 8c) through which flow occurs axially in mutually opposite directions.

8. Gas laser according to Claim 6 or 7, in which respectively neighbouring subsections in which the gas flows are directed towards one another open into a common gas extraction block (40, 42).

9. Gas laser according to one of Claims 6 to 8, in which respectively neighbouring subsections in which the gas flows are directed away from one another open into a common gas feed block (38).

10. Gas laser according to Claim 8 or 9, in which each gas discharge section (2, 4, 6) comprises the same number of subsections (2a-d, 4a-d, 6a-d), subsections neighbouring one another transverse to their longitudinal direction respectively being assigned a common gas feed and gas extraction block (38 and 40, 42).

11. Gas laser according to one of Claims 6 to 9, in which each gas discharge section (2, 4, 6) comprises four subsections (2a-d, 4a-d, 6a-d), subsections respectively neighbouring one another being flowed through in mutually opposite directions.

12. Gas laser according to one of Claims 8 to 11, in which the subsections are mounted in an axially floating fashion in the gas extraction and/or in the gas feed block (38, 40, 42).

13. Gas laser according to one of Claims 3 to 12, in which the active subsections (2a, 4a, 6a; 2d, 4d, 6d) neighbouring one another at the end of the gas discharge sections (2, 4, 6) are respectively mounted in an axially floating fashion in a common end flange (30 and 32).

14. Gas laser according to Claim 13, in which the passive subsections (8a, 8d; 8b, 8c) at the end of the coupling section (8) are respectively mounted in an axially floating fashion in the end flange (30 and 32), respectively, neighbouring them.

15. Gas laser according to Claim 13 or 14, in which the resonator mirrors (10, 12, 13, 14, 18; 10', 12') of the resonator are arranged in the end flanges (30, 32).

16. Gas laser according to one of Claims 13 to 15, in which the end flanges (30, 32) are simultaneously provided for feeding cooled laser gas (LG).

17. Gas laser according to one of Claims 13 to 16, in which the end flanges (30, 32) are rigidly interconnected by means of spacer tubes (36).

18. Gas laser according to one of Claims 13 to 16, in which there is mounted in an axially floating fashion between the end flanges (30, 32) a central support tube (34).

19. Gas laser according to Claim 18, in which the central support tube (34) is provided at the same time for guiding cooled laser gas (LG).

20. Gas laser according to Claim 18 or 19, in which two parallel-connected heat exchangers (44, 46) are provided, each gas extraction block (40, 42) being connected on the suction side to each heat exchanger (44, 46).

21. Gas laser according to one of the preceding Claims, in which at least the folding mirrors (10', 12') of a Z-fold have spherically curved surfaces.

22. Gas laser according to one of the preceding Claims, in which at least the folding mirrors (10', 12') of a Z-fold have aspherically curved surfaces.

23. Gas laser according to Claim 21 or 22, in which the folding mirrors (10', 12') form a telescope internal to the resonator.

## Revendications

1. Laser à gaz à flux axial, comprenant un résonateur qui a un trajet de rayonnement plié, dans un premier plan (Z) de pliage et dans un deuxième plan (U) de pliage à 45° du premier plan, et il est prévu dans le premier plan (Z) de pliage au moins un pliage en (Z), et dans le deuxième plan de pliage au moins un pliage (U) en U du trajet de rayonnement.

2. Laser à gaz suivant la revendication 1, dans lequel le deuxième plan (U) de pliage est incliné à 45° par rapport au plan horizontal.

3. Laser à gaz suivant la revendication 1 ou 2, dans lequel il est prévu dans le premier plan (Z) de pliage, au moins une première section (2) de décharge dans un gaz et une deuxième section (4) de décharge dans un gaz, parallèle à la première, qui sont couplées entre elles en diagonale, la première section (6) de décharge dans un gaz et une troisième section de décharge dans un gaz, parallèle et qui y est couplée en forme de U, formant le deuxième plan (U) de pliage.

4. Laser à gaz suivant la revendication 3, dans lequel les sections de décharge dans un gaz coupent un plan de coupe, qui s'étend perpendiculairement à elles, en des points qui forment un triangle (24) isocèle.

5. Laser à gaz suivant la revendication 3 ou 4, dans lequel la première section (2) de décharge dans un gaz et la deuxième section (4) de décharge dans un gaz sont couplées entre elles en diagonale, par une section (8) passive de couplage, dans laquelle passe le gaz (LG) de laser.

6. Laser à gaz suivant la revendication 3, 4 ou 5, dans lequel chaque section (2, 4, 6) de décharge dans un gaz, comprend au moins deux sous-sections actives (2a-d, 4a-d, 6a-d), qui sont parcourues axialement dans des sens opposés.

7. Laser à gaz suivant la revendication 5 ou 6, dans lequel la section (8) de couplage comprend au moins deux sous-sections (8a, 8b, 8c) passives, qui sont parcourues axialement dans des sens opposés.

8. Laser à gaz suivant la revendication 6 ou 7, dans lequel respectivement des sous-sections voisines dans lesquelles les courants de gaz, qui vont l'un vers l'autre, débouchent dans un bloc (40, 42) commun d'aspiration.

9. Laser à gaz suivant l'une des revendications 6 à 8, dans lequel respectivement des sous-sections voisines, dans lesquelles les courants de gaz s'éloignent l'un de l'autre, débouchent dans un bloc (38) commun d'afflux de gaz.

10. Laser à gaz suivant la revendication 8 ou 9, dans lequel chaque section (2, 4, 6) de décharge dans un gaz, comprend le même nombre de sous-sections (2a-d, 4a-d, 6a-d), respectivement, un bloc (38, 40, 42) commun d'afflux de gaz et d'aspiration de gaz étant associé à des sous-sections voisines l'une de l'autre transversalement à la direction longitudinale.

11. Laser à gaz suivant l'une des revendications 6 à 9, dans lequel chaque section (2, 4, 6) de décharge dans un gaz comprend quatre sous-sections (2a-d, 4a-d, 6a-d), des sous-sections respectivement voisines l'une de l'autre étant parcourues dans des sens opposés.

12. Laser à gaz suivant l'une des revendications 8 à 11, dans lequel les sous-sections dans le bloc (38, 40, 42) d'aspiration de gaz et/ou d'afflux de gaz, sont montées flottantes axialement.

13. Laser à gaz suivant l'une des revendications 3 à 12, dans lequel les sous-sections (2a, 4a, 6a ; 2d, 4d, 6d) actives voisines l'une de l'autre, à l'extrémité des sections (2, 4, 6) à décharge dans un gaz, sont montées flottantes axialement, respectivement, dans une bride (30 et 32) commune d'extrémité.

14. Laser à gaz suivant la revendication 13, dans lequel les sous-sections (8a, 8b ; 8b, 8c) passives, à l'extrémité de la section (8) de couplage, sont montées axialement flottantes, respectivement, dans la bride (30 ou 32) d'extrémité qui en est voisine.

15. Laser à gaz suivant la revendication 13 ou 14, dans lequel il monté dans les brides (30, 32) d'extrémités, les miroirs (10, 12, 13, 14, 18 ; 10', 12') du résonateur.

16. Laser à gaz suivant l'une des revendications 13 à 15, dans lequel les brides (30, 32) d'extrémités, sont prévues en même temps pour amener du gaz (LG) laser refroidi.

17. Laser à gaz suivant l'une des revendication 13 à 16, dans lequel les brides (30, 32) d'extrémités sont reliées, rigidement entre elles, par des tubes (36) d'entretoisement.

18. Laser à gaz suivant l'une des revendications 13 à 16, dans lequel il est monté, flottant axialement, un tube (34) central porteur entre les brides (30, 32) d'extrémités.

19. Laser à gaz suivant la revendication 18, dans lequel le tube (34) central porteur est prévu, en même temps, pour le passage de gaz (LG) laser refroidi.

20. Laser à gaz suivant la revendication 18 ou 19, dans lequel il est prévu deux échangeurs de chaleur (44, 46) montés en parallèle, chaque bloc (40, 42) d'aspiration de gaz étant raccordé du côté de l'aspiration à chaque échangeur de chaleur (44, 46).

21. Laser à gaz suivant les revendications précédentes, dans lequel au moins le miroir (10', 12') plié d'un pliage en Z a des surfaces accordées en série.

22. Laser à gaz suivant les revendications précédentes, dans lequel au moins le miroir (10', 12') plié d'un pliage en (Z) a des surfaces asphériques.

23. Laser à gaz suivant la revendication 21 ou 22, dans lequel les miroirs (10', 12') pliés, forment un télescope à résonateur interne.
